Europäisches Patentamt

European Patent Office

Office européen des brevets

(11) Publication number: **0 205 684**
**B1**

(12) **EUROPEAN PATENT SPECIFICATION**

(45) Date of publication of patent specification: **26.07.89**

(51) Int. Cl.⁴: **B 62 D 55/30**

(21) Application number: **85304102.8**

(22) Date of filing: **10.06.85**

(54) Track-laying vehicle.

(43) Date of publication of application:
**30.12.86 Bulletin 86/52**

(45) Publication of the grant of the patent:
**26.07.89 Bulletin 89/30**

(84) Designated Contracting States:
**BE DE FR IT NL**

(56) References cited:
**WO-A-85/02826**
**DE-C- 400 580**
**FR-A-2 502 573**
**US-A-1 401 625**
**US-A-2 452 671**

(73) Proprietor: **CATERPILLAR INC.**
**100 Northeast Adams Street**
**Peoria Illinois 61629-6490 (US)**

(72) Inventor: **Satzler, Ronald L.**
**Rural Route 2**
**Princeville Illinois 61559 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

EP 0 205 684 B1

# Description

This invention relates to track-laying vehicles, such as tractors or equipment, using track as opposed to wheels for providing both ground support and tractive effort.

Work vehicles, as opposed to vehicles for personnel transport, are generally intended to push or pull other equipment or earth, or carry a load. Consequently, these vehicles require high tractive forces between the vehicle and the terrain over which the vehicle is travelling. When using track belt to increase tractive force, a high load must be generated in the belt in order to minimize slippage between the track belts and the drive wheels. Various types of tensioning mechanisms have been suggested for use on track-laying vehicles with track belts to tension each track belt independently. For example, US—A—2452671 discloses one arrangement in which are pair of wheels are slidable on longitudinal side members of a vehicle frame and are interconnected by a pivotal link which is acted upon by a central jack to urge the one pair of wheels away from another pair of wheels and hence tension belts entrained about the wheels. However, this arrangement is complex and liable to jamming, cannot accommodate uneven ground, and it would be preferred to use a single axle extending across the vehicle.

US—A—1401625 discloses a vehicle of a kind, hereinafter referred to as of the kind described, having a frame with a central, vertical longitudinal plane; an axle connected to the frame at one end of the vehicle and extending thereacross through the plane; a first pair of wheel assemblies rotatably mounted on opposite ends of the axle independently of the frame; a second pair of driving wheel assemblies rotatably mounted on opposite sides of the frame at the other end of the vehicle; and first and second tracks entrained about the wheel assemblies on respective sides of the vehicle. However, the particular vehicle described is a small garden tractor including a sprocket drive for a track chain, rather than relying on friction to provide a belt drive, and it utilizes a complex and bulky mechanism to provide tensioning of the track and further provide recoil when objects pass between the sprocket drive and the track. When attempting to utilize apparatus of this type in large industrial vehicles, the components would be unreasonably large and bulky thus prohibiting their practical use.

In accordance with the invention, a vehicle of the kind described is characterised in that the tracks are substantially inextensible belts; and in that there is a belt tensioning mechanism which comprises means for universally swivelling the axle relatively to the frame and for enabling the axle to slide longitudinally of the frame, and means for adjusting the position of the axle relatively to the frame to maintain a predetermined tension in the belts while permitting the swivelling and longitudinal movement of the axle, the adjusting means including a force generating mechanism connected at one end directly to the frame and connected at the other end directly to the axle only between the first pair of wheel assemblies.

The present invention thus provides a tensioning mechanism which allows the axle to swivel about a locus relatively to the frame and further allows the axle to move longitudinally relatively to the frame for absorbing any motions created by one end of the axle moving in a longitudinal direction. Furthermore, the tensioning mechanism is compact while still having the ability to produce high forces for tensioning the belts. The entire mechanism utilized for tensioning and swivelling of the axle may be relatively simple in construction and does not require large bulky components. This arrangement provides the high forces necessary for tensioning the belts while still allowing the axle to move relatively to the frame whenever an object such as a rock, limb or board passes between the belt and the wheels.

An example of a vehicle constructed in accordance with the invention is illustrated in the accompanying drawings, in which:—

Figure 1 is a side elevation;

Figure 2 is a front elevation; and,

Figure 3 is a plan view showing a portion of the vehicle and partly in section on the line III—III in Figure 2.

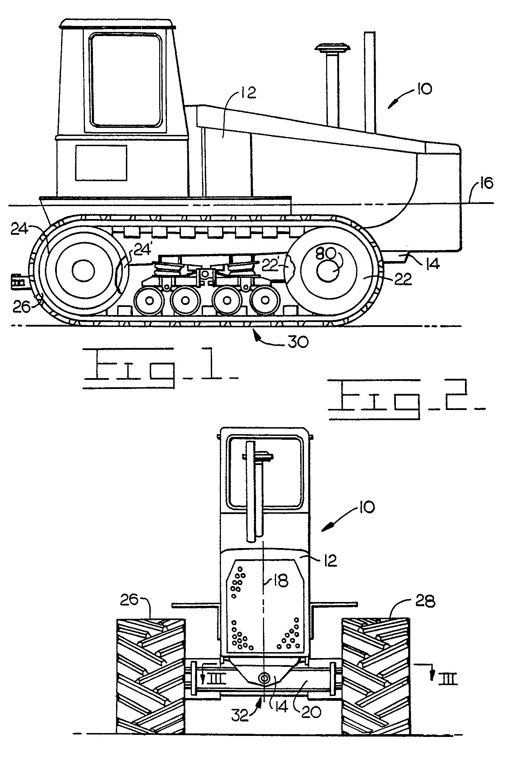

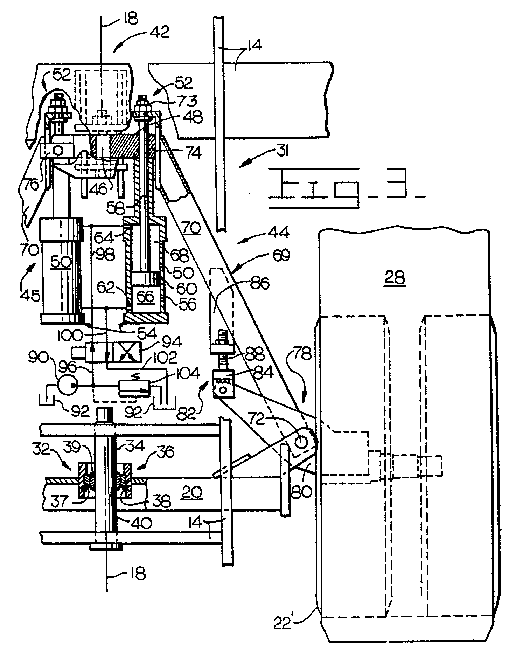

Referring now to the drawings and more particularly to Figure 1 and 2, a work vehicle 10 is shown having a chassis 12 and a frame 14 which constitutes a portion of the chassis 12. The frame defines a longitudinal axis 16 and a vertical plane 18 centrally disposed along the longitudinal axis 16.

The vehicle includes an axle 20 connected to a front portion of the frame 14 and has a first pair of wheel assemblies 22, 22' rotatably connected to opposite ends of the axle 20. A second pair of wheel assemblies 24, 24' are respectively connected to opposite sides of a rear portion of the frame 14. First and second inextensible belts 26, 28 are respectively entrained about the wheel assemblies 22, 24, 22', 24' on each side of the vehicle 10. A bogie system 30 is rotatably connected to the frame 14 on each side of the vehicle 10 and in load sharing contact with the respective belts 26, 28 to share the loads being placed on the belts from the load of the vehicle as it negotiates the terrain.

Referring now to Fig. 3, a belt tensioning mechanism 31 is illustrated which more clearly shows an embodiment of the present invention. A means 32 is provided for connecting the axle 20 to the frame 14 so that the axle 20 is free to swivel and to slide longitudinally relative to the frame. The connecting means 32 includes a pin 34 connected to the frame 14 parallel to the longitudinal axis 16 and along the centrally disposed plane 18. The connecting means 32 also includes a swivel bearing 36 connected to the axle 20 and slidably disposed on the pin 34. The swivel bearing 36 includes a race 37 secured to the axle 20 by a snap ring 38 and a spherical bearing member 39 defining a bore 40 adapted to slidably mount on the pin 34.

A means 42 is provided for adjusting the axle 20 relative to the frame 14 to maintain at least a predetermined tension on the first and second belts 26, 28, while permitting the swiveling and longitudinal movements of the axle 20. The adjusting means 42 includes a force generating mechanism 44 connected between the frame 14 and the axle 20.

The force generating mechanism 44 includes a jack mechanism 45 pivotably connected at one end to the frame 14 along the centrally disposed plane 18. The jack mechanism 45 includes a pivot pin 46, such as a bolt, dowell, etc., connected to the frame 14 along the centrally disposed plane 18 longitudinally remote from and in axial alignment with the pin 34. The jack mechanism 45 also includes a force transmitting member 48 pivotably mounted on the pivot pin 46 and a pair of jack assemblies 50.

Each of the jack assemblies 50 has a rod end portion 52 and a head end portion 54. Each of the jack assemblies 50 further includes a housing 56 and a rod 58 connected to a piston 60 which is slidably disposed in the housing 56. The head end portion 54 is generally defined by the housing 56 while the rod end portion 52 is generally defined by the rod 58. The housing 56 of each jack assembly 50 defines first and second ports 62, 64 respectively in communication with head and rod end pressure chambers 66, 68 which are separated by the piston 60. The housing 56 of each jack assembly is connected to opposite ends of the force transmitting member 48 while the rod 58 of each jack assembly 50 slidably extends through the force transmitting member 48 at the location of the connection with the housing 56.

The force generating mechanism 44 also includes a force transfer mechanism 69, such as, a pair of force transmitting arms 70 each respectively connected to opposite ends of the axle 20 by respective pin joints, one shown at 72. The other end of each of the force transmitting arms 70 is connected to the rod 58 of each of the jack assemblies 50 by locking nuts 73 in a known manner. The arms 70 each respectively has a surface 74 in sliding contact with the opposite ends of the force transmitting member 48. A plurality of retainers 76 are secured to the member 48 and adapted to maintain the sliding and alignment relationship between the surface 74 of the arms 70 and the opposite ends of the member 48.

Additionally, the force generating mechanism 44 includes a means 78 for aligning each of the first pair of wheel assemblies 22, 22' relative to the belts 26, 28. The alignment means 78 includes a pair of spindles 80 each pivotally connected to the opposite ends of the axle 20 at the respective pin joint 72 and a pair of adjusting assemblies 82 each being connected between the respective spindle 80 and the associated one of the force transmitting arms 70. The adjusting assembly 82 includes a first bracket 84 secured to the other end of the spindle 80 and a second bracket 86 secured to the arm 70 with an adjustable fastener member 88 connected between the brackets 84, 86. As shown, the fastener member 88 is a bolt and nut, but it is recognized that the fastener member 88 could be replaced with other known adjustable fastening means. Each of the spindles 80 has the respective wheel assembly 22/22' rotatably connected to one end thereof.

The force generating mechanism 44 additionally includes a source of pressurized fluid, such as a pump 90, which draws fluid from a tank 92 in a conventional manner and delivers pressurized fluid to a switching valve 94 through a conduit 96. A pair of conduits 98, 100 respectively connect the switching valvs 94 to the inlet ports 64, 62 of the jack assemblies 50. The switching valve 94 is connected to the tank 92 in a conventional manner by a conduit 102 and may be actuated either manually, electrically or hydraulically. A relief valve 104 is connected to the conduit 96 and adapted to control the pressure in the conduit 96 to a predetermined maximum level.

From a review of the Figs. and the above description, it is readily apparent that numerous modifications and/or combination of elements could be combined without departing from the essence of the invention. For example, various forms of hydraulic circuits could be utilized to extend and/or retract the cylinder disclosed herein without departing from the essence of the invention.

Industrial applicability

In the use of work vehicles of this type, the belt tensioning mechanism 31 as shown in the various embodiments herein is necessary to provide the high tensions in the belt to prevent slippage between the drive wheels 24, 24' and the first and second belts 26, 28. The tensioning mechanism 31 must generate sufficient tension in each of the belts 26, 28 so that there is a satisfactory frictional driving force between the drive wheels 24, 24' and the respective belt 26/28. For example, in one vehicle having a gross weight of 115.7 kN (26,000 lbs.) and a belt width of 61 cm (25 inches), an initial tension of 44.5 kN (10,000 lbs.) in each of the belts operated successfully. It is recognized that different size belts would vary in total force needed in the belt to maintain the frictional driving force between the belts 26, 28 and the respective wheel assemblies.

Furthermore, it is necessary to provide recoil of one side of the axle 20 in the event an object such as a rock, limb, board, etc. passes between one of the belts 26/28 and the respective wheel assembly 22/24, 22'/24'.

Referring more specifically to the operation of the embodiment shown in Fig. 3, fluid pressure from the pump 90 is directed to the pressure chambers 68 of the jack assemblies 50 generating a force on the piston 60 which is transferred through the rod 58 and the arms 70 to the axle 20. The bore 40 of the spherical bearing member 39 allows the axle 20 to slide relative to the pin 34.

Consequently, the force transmitted to the axle 20 is further transferred through the spindles 80 to the pair of wheel assemblies 22, 22' and tensions the first and second belts 26, 28. The relief valve 104 controls the maximum pressure in the pressure chambers 68 and consequently controls the tension in the belts 26, 28.

When a foreign object passes between, for example, the belt 28 and the wheel assembly 22', the spindle 80 that is connected to the wheel assembly 22' moves towards the second wheel assembly 24'. It is recognized that if pneumatic tires are being used in the wheel assembly 22' that the tires will take a portion of the recoil and in many cases will be sufficient to absorb all of the recoil needed. In the event that the spindle 80 which is connected to the axle 20 moves towards the second wheel assembly 24', the axle 20 pivots about the other wheel assembly 22 and slides relative to the pin 34 without inducing any bending moments in the axle 20. Simultaneously therewith the arm 70 slides along the surface 74 relative to one end of the force transmitting member 48 causing extension of the rod 58 relative to the housing 56 against the bias of the pressure in the pressure chamber 68. The fluid displaced in the pressure chamber 68 as a result of the movement of the rod 58 is forced out the port 64 to the tank 92 through the conduit 98, the switching valve 94 and the relief valve 104. Since the setting of the pressure relief valve 104 has not changed, the force on the axle 20 through the arm 70 does not change with the above-noted movement. As the foreign object moves out from between the belt and wheel assembly, the axle 20 returns to its original position by fluid under pressure entering the pressure chamber 68 causing movement of the piston 68, rod 58, arm 70, and axle 20.

The swivel bearing 36 further allows the axle 20 to pivot about the pin 34 in the event one of the wheel assemblies 22, 22' runs over a raised object on the ground. The force transmitting member 48 pivots about the pivot pin 46 thus allowing the jack assemblies 50 and arms 70 to pivot simultaneously with any pivoting movement of the axle 20 about the pin 34.

In the event that tensioning of the belts 26, 28 cause relative misalignment of the rotating axis of the wheel assemblies 22, 22', the adjusting assemblies 82 are adjusted in order to move the wheel assembly 22/22' about the pivot point 72 to realign the respective wheel assembly 22/22'.

It is desirable to change one or both of the belts 26, 28, the switching valve 94 is moved to its other position thus directing pressurized fluid to the pressure chambers 66 of the jack assemblies 50. The pistons 60 and associated rods 58 resulting in the axle 20 moving along the pin 34 towards the second pair of wheel assemblies 24, 24'. After the new belt(s) have been installed, the switching valve 94 is returned to the original position thus directing the pressurized fluid into the pressure chambers 68 of the jack assemblies 50 to tension the belts as previously described.

In view of the foregoing, it is readily apparent that the belt tensioning mechanism 31 shown and described in the various embodiments provides a simple mechanism having the ability to provide high tensioning forces in the belts 26, 28 while still allowing the axle 20 of the vehicle 10 to swivel and slide in a longitudinal direction relative to the frame 14 of the vehicle 10 to compensate for recoil action of one of the wheel assemblies 22, 22' relative to the other.

**Claims**

1. A vehicle (10) having a frame (14) with a central, vertical longitudinal plane (18); an axle (20) connected to the frame at one end of the vehicle and extending thereacross through the plane; a first pair of wheel assemblies (22, 22') rotatably mounted on opposite ends of the axle independently of the frame; a second pair of driving wheel assemblies (24, 24') rotatably mounted on opposite sides of the frame at the other end of the vehicle; and first and second tracks (26, 28) entrained about the wheel assemblies on respective sides of the vehicle; characterised in that the tracks are substantially inextensible belts (26, 28); and in that there is a belt tensioning mechanism (31) which comprises means (32) for universally swivelling the axle relatively to the frame and for enabling the axle to slide longitudinally of the frame, and means (42) for adjusting the position of the axle (20) relatively to the frame (14) to maintain a predetermined tension in the belts while permitting the swivelling and longitudinal movement of the axle, the adjusting means (42) including a force generating mechanism (44) connected at one end directly to the frame (14) and connected at the other end directly to the axle (20) only between the first pair of wheel assemblies (22, 22').

2. A vehicle according to claim 1, wherein the swivel means (32) includes a pin (34) and a universally swivelling bearing (36) slidably mounted on the pin (34), one of the pin (34) and the swivel bearing (36) being secured to the axle (20) at a point midway between the ends of axle (20) and the other of the pin (34) and swivel bearing (36) being secured to the frame (20) at the one end of the frame in the central plane (18).

3. A vehicle according to claim 2, wherein the pin (34) is attached to the frame (14) and the swivel bearing (36) is attached to the axle (20).

4. A vehicle according to any one of the preceding claims, wherein the force generating mechanism (44) includes a jack mechanism (45) pivotably connected at one end to the frame (14) and extending along the central plane (18) and a force transfer mechanism (69) connected to opposite ends of the axle (20) and operatively connected to the other end of the jack mechanism (45).

5. A vehicle according to claim 4, wherein the jack mechanism (45) includes a pivot pin (46) connected to the frame (14) along the central plane (18) longitudinally remote from and in axial alignment with the pin (34), a force transmitting member (48) pivotally mounted on the pivot pin (46) and a pair of jack assemblies (50) each respectively connected between opposite ends of the force transmitting member (48) and the force transfer mechanism (69).

6. A vehicle according to claim 5, wherein the force transfer mechanism (69) includes a pair of force transmitting arms (70) each connected between one of the jack assemblies (50) and one of the ends of the axle (20).

7. A vehicle according to claim 6, wherein each of the jack assemblies (50) includes a rod end portion (52) and a head end portion (54) with one of the end portions (52, 54) of the jack assemblies (50) being connected to the opposite ends of the force transmitting member (48) and the other of the end portions (52, 54) of the jack assemblies (50) being connected to the respective force transmitting arms (70).

8. A vehicle according to any one of claims 5 to 7, wherein each of the jack assemblies (50) is arranged to generate at least a predetermined force on the axle (20) for tensioning the first and second belts (26, 28) and is independently movable in response to one end of the axle (20) moving longitudinally relatively to the frame (14) while maintaining at least the predetermined tension in the first and second belts (26, 28).

9. A vehicle according to any one of the preceding claims, wherein the force generating mechanism (44) includes means (78) for aligning each of the first pair of wheel assemblies (22, 22') relatively to the respective belt (26, 28) so that the wheel assemblies are maintained in alignment with the belts.

10. A vehicle according to claim 9, when dependent at least one claim 7, wherein each of the force transmitting arms (70) is pivotally connected to the axle (20) by a pin joint (72) and the aligning means (78) includes a pair of spindles (80) pivotably connected to the respective end of the axle (20) and having the respective wheel assembly (22, 22') rotatably mounted on one end of each spindle (80), and a pair of adjusting assemblies (82) connected between the respective spindle (80) and the respective force transmitting arm (70).

11. A vehicle according to claim 10, wherein each of the spindles (80) is connected at one end to the axle (20) at the respective pin joint (72) and each of the adjusting assemblies (82) is connected to the other end of the respective spindle (80).

12. A vehicle according at least to claim 5, wherein the pair of jack assemblies (50) are operative selectively to retract the axle (20) and the first pair of wheel assemblies (22, 22') towards the second pair of wheel assemblies (24, 24') so that the first and second belts (26, 28) may be changed.

13. A vehicle according to any one of the preceding claims, wherein the first and second inextensible belts (26, 28) frictionally engage the respective wheel assembly of the second pair of wheel assemblies (24, 24') to provide a frictional driving force therebetween, the predetermined tension in the belts generated by the force generating mechanism (44) being sufficient to maintain the frictional driving force.

**Patentansprüche**

1. Fahrzeug (10) mit einem Rahmen (14) mit einer mittigen vertikalen Längsebene (18); einer Achse (20) verbunden mit dem Rahmen an einem Ende des Fahrzeugs und sich darüber durch die Ebene erstreckend; ein erstes Paar von Radanordnungen (22, 22') drehbar angeordnet an entgegengesetzten Enden der Achse unabhängig vom Rahmen; ein zweites Paar von Antriebsradanordnungen (24, 24') drehbar gelagert an entgegengesetzten Seiten des Rahmens am anderen Ende des Fahrzeugs; und erste und zweite Gleismittel (26, 28) herumgeführt um die Radanordnungen auf entsprechenden Seiten des Fahrzeugs; dadurch gekennzeichnet, daß die Gleismittel im wesentlichen nicht ausdehnbare Bänder (26, 28) sind; und daß ein Bandspannmechanismus (31) vorhanden ist, der Mittel (32) aufweist zum universellen Verschwenken der Achse bezüglich des Rahmens und zum Ermöglichen des Längsgleitens der Achse zum Rahmen, und Mittel (42) zum Einstellen der Position der Achse (20) relativ zum Rahmen (14), um eine vorbestimmte Spannung in den Bändern aufrechtzuerhalten, während das Kippen und die Längsbewegung der Achse gestattet ist, und wobei die Einstellmittel (42) einen Krafterzeugungsmechanismus (44) aufweisen, und zwar verbunden an einem Ende direkt mit dem Rahmen (14) und verbunden am anderen Ende direkt mit der Achse (20) nur zwischen dem ersten Paar von Radanordnungen (22, 22').

2. Fahrzeug nach Anspruch 1, wobei die Schwenkmittel (32) einen Stift (34) aufweisen und ein universell schwenkendes Lager (36) gleitend angeordnet auf dem Stift (34), wobei entweder der Stift (34) oder das Schwenklager (36) an der Achse (20) befestigt ist, und zwar an einem Punkt mittig zwischen den Enden der Achse (20), und wobei ferner das jeweilige andere Bauteil von Stift (34) und Schwenklager (36) am Rahmen (20) befestigt ist, und zwar an einem Ende des Rahmens in der Mittelebene (18).

3. Fahrzeug nach Anspruch 2, wobei der Stift (34) am Rahmen (14) befestigt ist und das Schenklager (36) an der Achse (20) befestigt ist.

4. Fahrzeug nach einem der vorhergehenden Ansprüche, wobei der Krafterzeugungsmechanismus (44) einen Hydraulikzylindermechanismus (45) aufweist, und zwar schwenkbar verbunden an einem Ende mit dem Rahmen (14) und sich längs der Mittelebene (18) erstreckend, und wobei ferner ein Kraftübertragungsmechanismus (69) mit den entgegengesetzten Enden der Achse (20) verbunden ist und betriebsmäßig mit dem anderen Ende des Hydraulikzylindermechanismus (45) in Verbindung steht.

5. Fahrzeug nach Anspruch 4, wobei der Hydraulikzylindermechanismus (45) einen Schwenkstift (46) verbunden mit dem Rahmen (14) längs der Mittelebene (18) in Längsrichtung entfernt von und in Axialausrichtung mit dem Stift (34) aufweist, und wobei ein Kraftübertragungsglied (48) schwenkbar auf dem Schwenkstift (46) gelagert ist und ein Paar von Hydraulikzylinderanordnungen (50) jeweils in entsprechender Weise zwischen den entgegengesetzten Enden des Kraftübertragungsglieds (48) und dem Kraftübertragungsmechanismus (69) verbunden ist.

6. Fahrzeug nach Anspruch 5, wobei der Kraftübertragungsmechanismus (69) ein Paar von Kraftübertragungsarmen (70) aufweist, deren jeder zwischen einer der Hydraulikzylinderanordnung (50) und einem der Enden der Achse (20) verbunden ist.

7. Fahrzeug nach Anspruch 6, wobei jede der Hydraulikzylinderanordnungen (50) ein Stangenendteil (52) und ein Kopfendteil (54) aufweist, wobei einer der Endteile (52, 54) der Hydraulikzylinderanordnung (50) mit den entgegengesetzten Enden des Kraftübertragungsgliedes (48) verbunden ist, und wobei ferner der andere Endteil der Endteile (52, 54) der Hydraulikzylinderanordnung (50) mit den ensprechenden Kraftübertragungsarmen (70) verbunden ist.

8. Fahrzeug nach einem der Ansprüche 5 bis 7, wobei jede der Hydraulikzylinderanordnungen (50) derart angeordnet ist, daß mindestens eine vorbestimmte Kraft auf die Achse (20) erzeugt wird, und zwar zum Spannen der ersten und zweiten Bänder (26, 28), wobei jede der Hydraulikzylinderanordnungen (50) unabhängig bewegbar ist in Folge der Bewegung eines Endes der Achse (20) in Längsrichtung relativ zum Rahmen (14) während mindestens die vorbestimmte Spannung in den ersten und zweiten Bändern (26, 28) aufrechterhalten bleibt.

9. Fahrzeug nach einem der vorhergehenden Ansprüche, wobei der Krafterzeugungsmechanismus (44) Mittel (78) aufweist zum Ausrichten jeder Anordnung des ersten Paars von Radanordnungen (22, 22') bezüglich des entsrechenden Bandes (26, 28) derart, daß die Radanordnungen in Ausrichtung mit den Bändern gehalten werden.

10. Fahrzeug nach Anspruch 9 bei Abhängigkeit mindestens von Anspruch 7, wobei jeder der Kraftübertragungsarme (70) schwenkbar mit der Achse (20) durch eine Stiftverbindung (72) verbunden ist und die Ausrichtmittel (78) ein Paar von Spindeln (80) aufweisen, und zwar schwenkbar verbunden mit dem entsprechenden Ende der Achse (20), und wobei der entsprechende Radanordnung (22, 22') drehbar an einem Ende jeder Spindel (80) gelagert ist, und wobei ferner ein Paar von Einstellanordnungen (82) zwischen der entsprechenden Spindel (80) und dem entsprechenden Kraftübertragungsarm (70) verbunden ist.

11. Fahrzeug nach Anspruch 10, wobei jede der Spindeln (80) an einem Ende mit der Achse (20) der entsprechenden Stiftverbindung (72) verbunden ist, und wobei jede der Einstellanordnung (82) mit dem anderen Ende der entsprechenden Spindel (80) verbunden ist.

12. Fahrzeug nach mindestens Anspruch 5, wobei das Paar von Hydraulikzylinderanordnung (50) selektiv betätigbar ist, um die Achse (20) und das erste Paar von Radanordnungen (22, 22') zu dem zweiten Paar von Radanordnungen (24, 24') zurückzuziehen, so daß die ersten und zweiten Bänder (26, 28) gewechselt werden können.

13. Fahrzeug nach einem der vorhergehenden Ansprüche, wobei die ersten und zweiten unausdehnbaren Bänder (26, 28) reibungsmäßig in Eingriff stehen mit der entsprechenden Radanordnung des zweiten Paars von Radanordnungen (24, 24'), um eine reibungsmäßige Antriebskraft dazwischen vorzusehen, und wobei ferner die vorbestimmte Spannung der Bänder erzeugt durch den Krafterzeugungsmechanismus (44) ausreichend ist, um die Reibungsantriebskraft aufrechtzuerhalten.

**Revendications**

1. Véhicule (10) comportant un châssis (14) qui présente un plan longitudinal vertical central (18); un essieu (20) monté sur le châssis à l'une des extrémités du véhicule et qui s'étend transversalement par rapport à celui-ci à travers le plan; deux premiers ensembles de roues (22, 22') montées rotatives sur des extrémités opposées de l'essieu, indépendamment du châssis; deux seconds ensembles de roues motrices (24, 24') montées rotatives sur des côtés opposés du châssis, à l'autre extrémité du véhicule; et des premier et second chemins de roulement (26, 28) entraînés autour des ensembles de roues sur des côtés respectifs du véhicule; caractérisé en ce que les chemins de roulement sont des courroies sensiblement inextensibles (26, 28), et en ce qu'il est prévu un mécanisme tendeur de courroies (31) comprenant des moyens (32) pour permettre un pivotement universel de l'essieu par rapport au châssis et pour permettre à l'essieu de coulisser dans le sens de la longueur du châssis, et des moyens (42) pour ajuster la position de l'essieu (20) par rapport au châssis (14), afin de maintenir une tension prédéterminée dans les courroies, tout en permettant le pivotement et le déplacement longitudinal de l'essieu, les moyens d'ajustement (42) comportant un mécanisme générateur de force (44) relié directement au châssis (14), au niveau de l'une de ses extrémités, et à l'essieu (20), au niveau de son autre extrémité, uniquement entre les deux premiers ensembles de roues (22, 22').

2. Véhicule selon la revendication 1, dans lequel les moyens de pivotement (32) comportent un pivot (34) et un palier de pivotement universel (36) monté coulissant sur le pivot (34), l'un du pivot (34) et du palier de pivotement (36) étant fixé à l'essieu (20), au niveau d'un point situé à mi-chemin entre les extrémités de l'essieu (20), tandis que l'autre est fixé au châssis (14), au niveau de l'extrémité de celui-ci située dans le plan central (18).

3. Véhicule selon la revendication 2, dans lequel le pivot (34) est fixé au châssis (14), tandis que le palier de pivotement (36) est fixé à l'essieu (20).

4. Véhicule selon l'une quelconque des revendications précédentes, dans lequel le mécanisme générateur de force (44) comporte un mécanisme de vérins (45) monté pivotant au niveau de l'une des extrémités du châssis (14) s'étendant le long du plan central (18), et un mécanisme de transfert de force (69) accouplé avec des extrémités opposées de l'essieu (20) et relié d'une manière fonctionnelle à l'autre extrémité du mécanisme de vérins (45).

5. Véhicule selon la revendication 4, dans lequel le mécanisme de vérins (45) comporte un axe de pivotement (46) relié au châssis (14) le long du plan central (18), à distance longitudinalement du pivot (34) et en alignement axial avec celui-ci, un organe de transmission de force (48) monté pivotant sur l'axe de pivotement (46), et deux ensembles de vérins (50) respectivement montés entre des extrémités opposées de l'organe de transmission de force (48) et le mécanisme de transfert de force (69).

6. Véhicule selon la revendication 5, dans lequel le mécanisme de transfert de force (69) comporte deux bras de transmission de force (70) respectivement montés entre l'un des ensembles de vérins (50) et l'une des extrémités de l'essieu (20).

7. Véhicule selon la revendication 6, dans lequel chacun des ensembles de vérins (50) comporte une partie d'extrémité de tige (52) et une partie d'extrémité de tête (54), l'une des parties d'extrémité (52, 54) des ensembles de vérins (50) étant reliée aux extrémités opposées de l'organe de transmission de force (48), et l'autre aux bras de transmission de force (70) correspondants.

8. Véhicule selon l'une quelconque des revendications 5 à 7, dans lequel chacun des ensembles de vérins (50) est conçu pour exercer au moins une force prédéterminée sur l'essieu (20), en vue de tendre les première et seconde courroies (26, 28) et est mobile séparément en réponse au déplacement longitudinal de l'une des extrémités de l'essieu (20) par rapport au châssis (14), tout en maintenant au moins la tension prédéterminée dans les première et seconde courroies (26, 28).

9. Véhicule selon l'une quelconque des revendications précédentes, dans lequel le mécanisme générateur de force (44) comporte des moyens (78) pour aligner chacun des deux premiers ensembles de roues (22, 22') par rapport à la courroie (26, 28) correspondante, de façon que les ensembles de roues soient maintenus en alignement avec les courroies.

10. Véhicule selon la revendication 9, lorsque celle-ci est dépendante au moins de la revendication 7, dans lequel chacun des bras de transmission de force (70) est relié à pivotement à l'essieu (20) par une articulation à tourillon (72), les moyens d'alignement (78) comportant deux broches (80) qui sont accouplées à pivotement avec l'extrémité correspondante de l'essieu (20) et qui ont l'ensemble de roues (22, 22') correspondant monté rotatif sur l'une de leurs extrémités, et deux ensembles d'ajustement (82) montés entre la broche (80) correspondante et le bras de transmission de force (70) correspondant.

11. Véhicule selon la revendication 10, dans lequel chacune des broches (80) est, à l'une de ses extrémités, accouplée avec l'essieu (20), au niveau de l'articulation à tourillon (72) correspondante, chacun des ensembles d'ajustement (82) étant relié à l'autre extrémité de la broche (80) correspondante.

12. Véhicule selon au moins la revendication 5, dans lequel les deux ensembles de vérins (50) sont actifs sélectivement pour rétracter l'essieu (20) et les deux premiers ensembles de roues (22, 22') en direction des deux seconds ensembles de roues (24, 24'), de façon que les première et seconde courroies (26, 28) puissent être changées.

13. Véhicule selon l'une quelconque des revendications précédentes, dans lequel les première et seconde courroies inextensibles (26, 28) viennent en contact à frottement avec l'ensemble de roues correspondant des deux seconds ensembles de roues (24, 24'), pour établir entre eux une force d'entraînement par frottement, la tension prédéterminée des courroies engendrée par le mécanisme générateur de force (44) suffisant à maintenir la force d'entraînement par frottement.

12

10

16

24

24

80

22'

22

22

26

30

Fig 1

Fig 2

10

12

18

26

28

III

III

32

14

20

1

Fig.3.